# EUROPÄISCHE PATENTSCHRIFT

(11) **EP 3 577 746 B1**
(45) Veröffentlichungstag und Bekanntmachung des Hinweises auf die Patenterteilung: **20.01.2021**
(21) Anmeldenummer: 18704491.2
(22) Anmeldetag: 02.02.2018
(51) Int. Cl.: H02K 15/00, H02K 17/16, H02K 17/20, H02K 3/02

(54) **HERSTELLUNG EINES ROTORS MITTELS ADDITIVER FERTIGUNG**
MANUFACTURE OF A ROTOR USING ADDITIVE MANUFACTURING
FABRICATION ADDITIVE D'UN ROTOR

(30) Priorität: 10.03.2017 EP 17160315
(43) Veröffentlichungstag der Anmeldung: 11.12.2019
(73) Patentinhaber: Siemens Aktiengesellschaft, 80333 München (DE)
(72) Erfinder: BÜTTNER, Klaus, 97618 Hollstadt (DE); SEUFERT, Reiner, 97616 Salz (DE); VOLLMER, Rolf, 36129 Gersfeld (DE)
(86) Internationale Anmeldenummer: PCT/EP2018/052658
(87) Internationale Veröffentlichungsnummer: WO 2018/162157

(56) Entgegenhaltungen:
- EP-A1- 2 953 245
- EP-A1- 3 006 138
- EP-A1- 3 131 189
- JP-A- 2015 133 784
- US-A1- 2015 076 951
- US-A1- 2016 352 201

## Beschreibung

Die Erfindung betrifft ein Verfahren zur Herstellung eines Rotors einer elektrischen Maschine, wobei der Rotor einen konzentrisch zur Rotorachse angeordneten Rotorkern aufweist, wobei der Rotorkern Nuten aufweist und wobei der Rotorkern am jeweiligen axialen Ende der Nuten jeweils eine ringförmige, konzentrisch zur Rotorachse angeordnete Aussparung aufweist, welche die Nuten verbindet. Ferner betrifft die Erfindung einen durch dieses Verfahren hergestellten Rotor einer elektrischen Maschine.

Bisher werden verschiedene Verfahren zur Herstellung eines Kurzschlusskäfigs, der Käfigstäbe im Rotorpaket sowie Kurzschlussringe an den Paketenden umfasst, für einen Rotor einer Asynchronmaschine genutzt.

Beim Kupfer-Druckgießverfahren werden die Käfigstäbe sowie die Kurzschlussringe gegossen.

Bei einem weiteren bekannten Verfahren werden bereits vorgefertigte Kupferstäbe in die im Rotorpaket befindlichen Nuten eingefügt und anschließend Kupferscheiben als Kurzschlussringe angelötet oder angeschweißt.

Bei einem dritten bekannten Verfahren werden vorgefertigte Kupferstäbe in im Rotorpaket befindliche Nuten eingefügt. Jedoch werden die Nuten nicht komplett ausgefüllt. Per Aluminium-Druckgießverfahren wird durch den entstandenen Kanal in den nicht komplett ausgefüllten Nuten zuerst ein unterer Kurzschlussring gegossen. Die Nuten werden anschließend aufgefüllt, sodass ein oberer Kurzschlussring angegossen werden kann.

Aus der EP 2 800 254 A1 ist zudem ein Verfahren bekannt, bei welchem ein Granulat eines elektrisch leitfähigen Materials in die Nuten und in die ringförmigen Aussparungen eingebracht wird, welches unter Zuführung von Hitze und unter Ausübung von Druck materialschlüssig mit dem Rotorkern verbunden wird.

Aus der EP 0 484 533 B1 ist ein Verfahren zur Anbringung von Beschichtungen auf die Oberfläche eines Produkts bekannt, wobei in einen Gasfluss ein metallisches Pulver eingebracht wird und dieses Gas- Pulvergemisch mit Überschallgeschwindigkeit auf das zu beschichtende Produkt trifft.

Die US 2016/352201 A1 offenbart eine elektrische Maschine, z. B. Generator, für Kraftfahrzeuge, mit einer um eine Achse rotierenden Rotoreinheit, die einen Rotorkern und einen Käfig umfasst, wobei der Käfig einen Umfang des Rotorkerns umgibt, wobei der Käfig Impellerflügel aufweist, die am Ende des Rotorkerns angeordnet sind.

Die EP 2 953 245 A1 offenbart einen Käfigläufer einer rotatorischen Asynchronmaschine mit einem axial geschichteten Blechpaket, mit im Wesentlichen axial verlaufenden Nuten, in denen sich zumindest ein elektrischer Leiter befindet, der sich zumindest aus zwei Teilleitern unterschiedlich elektrisch leitfähigen Materialien zusammensetzt, einem an der jeweiligen Stirnseite des Blechpakets vorgesehenen Kurzschlussring, der die axial aus dem Blechpaket ragenden elektrischen Leiter der jeweiligen Nuten miteinander elektrisch leitend verbindet, wobei das hochfestere Material der unterschiedlichen elektrisch leitfähigen Materialien im axialen Verlauf der jeweiligen Nut betrachtet zumindest abschnittsweise dem radial äußeren Bereich der Nut zugewandt ist.

Die EP 3 006 138 A1 betrifft ein Verfahren zum schichtweisen Herstellen eines metallischen Werkstücks durch additive Fertigung, bei dem metallurgische Schichten des Werkstücks erzeugt werden, indem für jede metallurgische Schicht pulverförmig metallischer Werkstoff bereitgestellt und mit einem Laserstrahl beaufschlagt wird, wobei der jeweils mit dem Laserstrahl beaufschlagten Schicht des pulverförmigen metallischen Werkstoffs ein Prozessgas zugeführt wird. Es ist vorgesehen, dass das Prozessgas für unterschiedliche metallurgische Schichten des Werkstücks mit unterschiedlicher Gaszusammensetzung verwendet wird und dass für jeweils benachbarte metallurgische Schichten, für die das Prozessgas mit unterschiedlicher Gaszusammensetzung verwendet wird, die Gaszusammensetzung jeweils derart gewählt wird, dass durch Gaszusammensetzung beeinflusste metallurgische Eigenschaften der jeweils benachbarten metallurgischen Schichten vorgegebene Unterschiede aufweisen.

Die US 2015/0076951 A1 bezieht sich auf die Herstellung von elektrischen Maschinen wie Motoren oder Generatoren.

Die EP 300 613 8 A1 betrifft ein Verfahren zum schichtweisen Herstellen eines metallischen Werkstücks durch laserunterstützte additive Fertigung.

Die JP 2015133784 A betrifft einen Induktionsmotor.

Infolge der hohen thermischen Belastung beim Kupfer-Druckgießen haben die Werkzeuge zum Kupfer-Druckgießen eine eingeschränkte Lebensdauer. Die elektrische Leitfähigkeit des druckgegossenen Kupfers in den Nuten ist zudem aufgrund von Materialverschmutzung und Lunkern verringert.

Aufgrund von Belastungen durch Fliehkräfte und Schwingungen besteht beim Anlöten bzw. Anschweißen des Kurzschlussrings an die Käfigstäbe die Gefahr der Rissbildung an den entstandenen Löt- oder Schweißstellen zwischen Kurzschlussstab und Kurzschlussring.

Wird der Nutquerschnitt bei dem oben genannten dritten Verfahren nicht komplett mit Kupfer gefüllt, ist der Rotor weniger gut für den Umrichterbetrieb geeignet, bei welchem der Kurzschlusskäfig sofort mit Strom beaufschlagt wird und daher das leitfähige Kupfer weniger Verluste verursacht als Aluminium.

Eine Vergrößerung der Oberfläche des Kurzschlussrings und das Einfügen von Schlitzen in ebendiesen, um eine bessere Kühlung zu erreichen, sowie der Aufbau von Hohlräumen und Kanälen, die als Thermosiphons dienen, sind bei den beschriebenen Verfahren nicht möglich. Zudem kann ein Materialgradient im Kurzschlussring nicht bewerkstelligt werden, bei welchem ein Verlauf von insbesondere leitfähigem Kupfer am Innenradius zu hartem und gegenüber hohen Drehzahlen beständigem Stahl am Außenradius besteht.

Der Erfindung liegt die Aufgabe zugrunde, ein Verfahren zur Herstellung eines vorzugsweise als Käfigläufer ausgeführten Rotors einer elektrischen Maschine zu finden, welches eine materialschlüssige Verbindung von Käfigstäben und- ringen sowie insbesondere im Kurzschlussring einen Materialgradienten von wenigstens zwei Materialien unterschiedlicher Festigkeit und die Einbringung von Schlitzen, Öffnungen und Kanälen, vorzugsweise zu Kühlzwecken, sowie Hohlräumen in den Kurzschlussring ermöglicht. Weiterhin liegt der Erfindung die Aufgabe zugrunde, einen entsprechenden Rotor mit Kurzschlussring zu schaffen.

Die Lösung der gestellten Aufgabe gelingt durch ein Verfahren mit den in Anspruch 1 angegebenen Merkmalen.

Zudem gelingt die Aufgabe durch einen Rotor einer elektrischen Maschine, der nach diesem Verfahren hergestellt wurde.

Weitere vorteilhafte Ausführungen ergeben sich aus den Unteransprüchen.

Die Erfindung bietet den Vorteil, dass ein unter Verwendung eines additiven Fertigungsverfahrens, insbesondere eines Metall-Pulver-Auftragsverfahrens (MPA-Verfahren), hergestellter vorzugsweise als Käfigläufer ausgeführter Rotor einer elektrischen Maschine aus verschiedenen Materialien aufgebaut werden kann. Während bei anderen additiven Fertigungsverfahren wie Metall-Lasersintern nur eine Materialart zur Herstellung eines Bauteils verwendet werden kann, können beim MPA-Verfahren bis zu sechs verschiedene Materialien gleichzeitig eingesetzt werden.

Es ist möglich, vorgefertigte Kupferstäbe in im Rotorpaket befindliche Nuten einzufügen, wobei die Nuten vollständig ausgefüllt werden, und anschließend vorzugsweise mittels MPA-Verfahren die Kurzschlussringe an den axialen Enden der Nuten materialschlüssig anzufügen. Zudem ist es möglich sowohl die Käfigstäbe als auch die Kurzschlussringe des Rotors mit diesem Verfahren herzustellen. Hierbei wird zuerst ein unterer Teil, der einen unteren Kurzschlussring und ca. die halbe Kurzschlussstablänge umfasst, gefertigt. Anschließend wird das Rotorpaket eingefügt und die andere Hälfte der Käfigstäbe sowie ein oberer Kurzschlussring gefertigt. Außerdem können auch nur die Kurzschlussringe per MPA-Verfahren gefertigt werden.

Beim MPA-Verfahren wird ein Hauptgas, vorzugsweise Wasserdampf, in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe kinetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt.

Beim MPA-Verfahren können mehrere Düsen gleichzeitig verschiedene Pulverpartikel auftragen. Somit kann bei der Herstellung eines Bauteils ein Materialgradient von Materialien unterschiedlicher Festigkeit erreicht werden. So ist es bei einer bevorzugten Ausführungsform möglich, einen Kurzschlussring zu erzeugen, der am Innenradius insbesondere leitfähiges Kupfer oder Aluminium für einen bestmöglichen Wirkungsgrad und am Außenradius insbesondere Materialien höherer Festigkeit wie Stahl oder Titan aufweist, um hohen Drehzahlen standzuhalten. Der Materialgradient kann hierbei in axialer wie in radialer Richtung fließend ausgeführt sein.

Durch den schichtweisen Aufbau des Kurzschlussrings durch das MPA-Verfahren ist auch das Einfügen einer Gitter- oder Haltestruktur aus beständigem Stahl oder Titan möglich.

Beim MPA-Verfahren können zu Kühlzwecken Öffnungen, Schlitze und Kanäle im Kurzschlussring ausgespart werden sowie Vergrößerungen der Oberfläche gefertigt werden. Das Anbringen von Lüfterflügeln und Wuchtelementen ist möglich.

Das hierdurch ebenfalls mögliche Aussparen von Hohlräumen in den Kurzschlussring optimiert die Masseverteilung und wirkt sich positiv auf die Belastungen durch entstehende Fliehkräfte wie auch auf höhere Drehzahlen aus.

Durch die hohe kinetische Energie der Partikel beim Aufprall ist bei Verwendung eines MPA-Verfahrens zudem eine stoffschlüssige Verbindung des Kurzschlussrings mit einer anzubindenden Welle möglich.

Der mittels des MPA-Verfahrens gefertigte Kurzschlussring bietet den Vorteil, dass Öffnungen insbesondere in Form von Schlitzen realisiert werden können, welche eine Kühlung erleichtern. Außerdem können Kanäle ausgespart werden, die sich besonders gut zur Verwendung als Thermosiphons eignen. Dadurch wird eine Effizienz- und Leistungssteigerung der elektrischen Maschine erreicht.

Die ausgesparten Hohlräume im Kurzschlussring wirken sich aufgrund der Masseverteilung positiv auf hohe Drehzahlen aus, denn Fliehkräfte werden durch den näher an die Welle rückenden Massenschwerpunkt verringert.

Durch den bereits erläuterten Materialgradienten im Kurzschlussring sowie eine eingefügte Gitter- oder Haltestruktur, vorzugsweise aus Titan oder Stahl, können ebenso höhere Drehzahlen bewerkstelligt werden.

Per MPA-Verfahren angefügte Lüfterflügel zur Kühlung und/oder Wuchtelemente, um einen Ausgleich der Masseverteilung und somit einen Gleichlauf des Motors zu erreichen, wirken sich positiv auf die Effizienz und Leistung des Motors aus.

Die stoffschlüssige Verbindung des Kurzschlussrings an die Welle erlaubt höhere Drehzahlen.

Besonders gut eignet sich ein Kurzschlusskäfig, der vollständig aus Kupfer gefertigt ist, für den Umrichterbetrieb, da hierbei der Kurzschlusskäfig beim Anlauf sofort mit Strom beaufschlagt wird und daher sehr leitfähig sein muss. Aufgrund der höheren Leitfähigkeit von Kupfer gegenüber Aluminium können insbesondere Kurzschlussringe aus Kupfer kompakter gefertigt werden.
Im Folgenden wird die Erfindung anhand der in den Figuren dargestellten Ausführungsbeispiele näher beschrieben und erläutert. Es zeigen:
- FIG 1: eine Ausgestaltung eines an eine Welle angebundenen Rotors aus einem Rotorkern und zwei Kurzschlussringen,
- FIG 2: eine Ausgestaltung des Rotorkerns, der Nuten aufweist,
- FIG 3: eine Ausgestaltung des an die Welle angebundenen Rotors, wobei die beiden Kurzschlussringe Öffnungen aufweisen,
- FIG 4: eine Ausgestaltung eines Materialgradienten im Kurzschlussring, wobei der Übergang zwischen den Materialen fließend ist,
- FIG 5: eine Ausgestaltung des mit wenigstens einem Hohlraum und wenigstens einem Kanal versehenen Kurzschlussrings und
- FIG 6: den Ablauf des Herstellungsverfahrens.

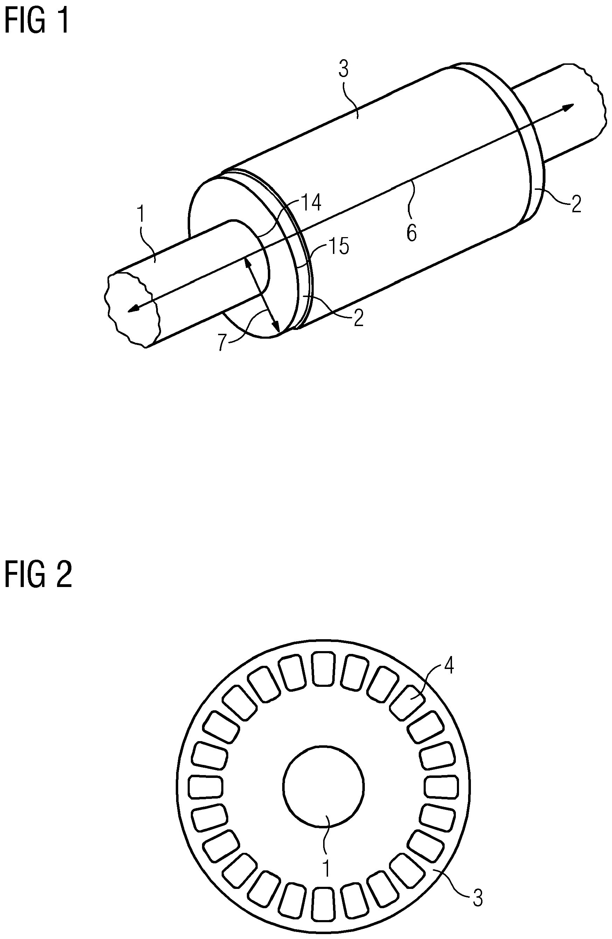

FIG 1 zeigt eine Ausgestaltung eines an eine Welle 1 angebundenen Rotors, der einen Rotorkern 3 und jeweilig an dessen axialem Ende einen Kurzschlussring 2 aufweist. Zudem werden die Axialrichtung 6 und die Radialrichtung 7, sowie der Innenradius 14 und der Außenradius 15 des Kurzschlussrings gezeigt. Vorzugsweise ist der Rotor als Käfigläufer ausgeführt und umfasst Käfigstäbe, die in axialer Richtung 6 oder geschrägt im Wesentlichen in axialer Richtung 6 verlaufen, sowie Kurzschlussringe 2 an den axialen Enden der Käfigstäbe, die diese kurzschließen. Erfindungsgemäß können nur die Käfigstäbe oder nur die Kurzschlussringe 2 oder die Käfigstäbe und die Kurzschlussringe 2 mittels MPA-Verfahren gefertigt werden. Vorteilhaft werden die Käfigstäbe aus vorzugsweise Kupfer oder Aluminium vorgefertigt und in den Rotorkern 3 eingefügt und anschließend die Kurzschlussringe 2 mittels MPA-Verfahren angefügt. Ein mittels MPA-Verfahren hergestellter Kurzschlussring 2 bietet den Vorteil, dass insbesondere Hohlräume, Kanäle und Öffnungen eingefügt werden können. Auch ein Materialgradient, bei welchem in axialer 6 und/oder radialer 7 Richtung ein Übergang zweier Materialien unterschiedlicher Festigkeit bewerkstelligt wird, ist möglich.

FIG 2 zeigt eine Ausgestaltung des Rotorkerns 3, der an eine Welle 1 angebunden ist und in axialer Richtung 6 Nuten 4 aufweist. Die Nuten können mit vorgefertigten Käfigstäben gefüllt werden und anschließend werden per MPA-Verfahren die Kurzschlussringe angefügt.

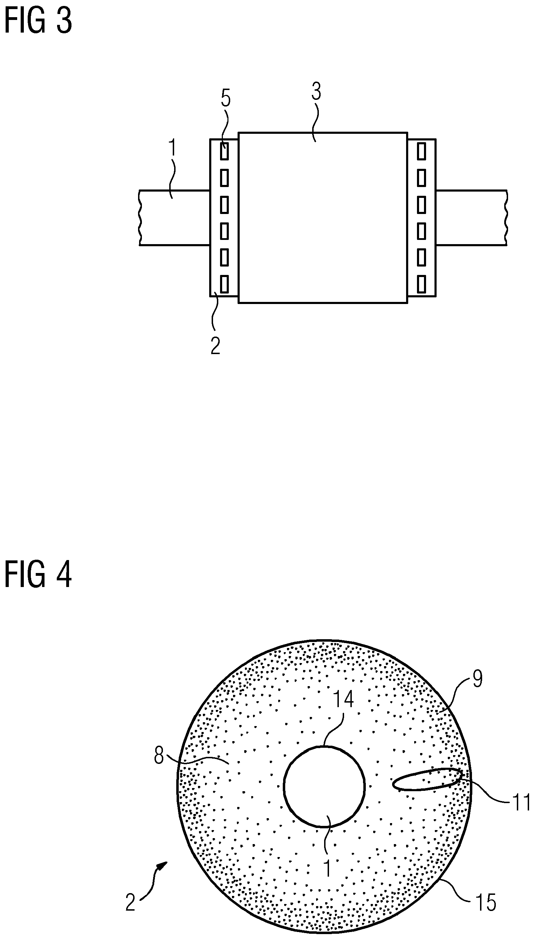

FIG 3 zeigt eine Ausgestaltung des an die Welle 1 angebundenen Rotors. Die Kurzschlussringe 2 sind mit Öffnungen 5 versehen, welche vorzugsweise als Schlitze ausgeführt sind, und zu Kühlzwecken dienen.

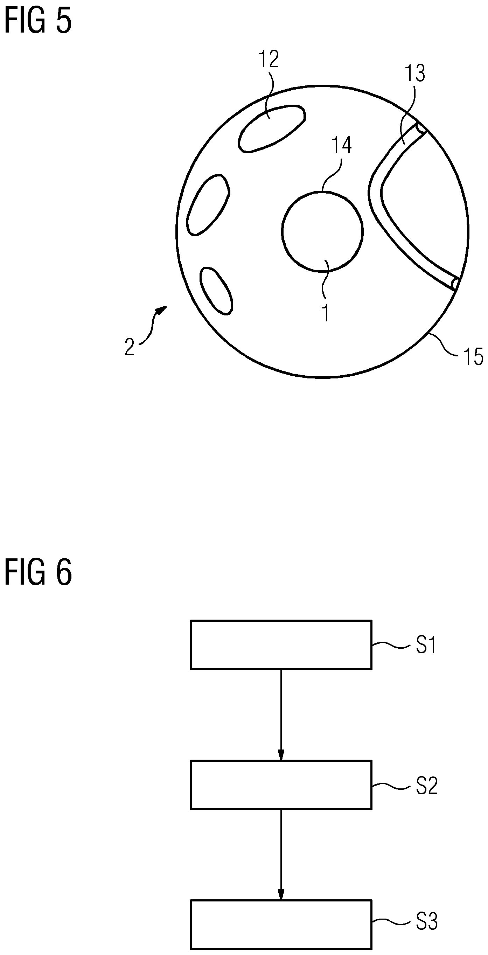

FIG 4 zeigt eine Ausgestaltung eines Materialgradienten in einem Kurzschlussring 2, bei welchem in radialer Richtung 7 (vgl. FIG 1) ein Übergang von einem Material einer ersten Festigkeit, insbesondere Kupfer oder Aluminium, zu einem Material einer gegenüber der ersten höheren Festigkeit, insbesondere Stahl oder Titan, geschaffen ist. Am Innenradius 14 des Kurzschlussrings 2, welcher an die Welle 1 angrenzt, wird ein elektrisch leitfähiges Material wie Kupfer angebracht, um die in die Nuten eingebrachten Käfigstäbe kurzzuschließen. Am Außenradius 15 wird ein gegenüber Fliehkräften beständiges Material wie Stahl eingebracht. In FIG 5 ist ein fließender Übergang 11 zwischen den beiden Materialien 8 und 9 dargestellt. Auch in axialer Richtung 6 ist ein Materialgradient, der einen fließenden Übergang 11 zweier oder mehrerer Materialien 8 und 9 aufweist, möglich. Da die Kurzschlussringe 2 an den jeweiligen axialen Enden des Rotors mittels MPA-Verfahren angefügt werden, ist eine stoffschlüssige Verbindung zur Welle 1 möglich.

FIG 5 zeigt eine Ausgestaltung des mit Hohlräumen 12 und Kanälen 13 versehenen Kurzschlussrings 2. Die Hohlräume sind insbesondere näher am Außenradius 15 als am Innenradius 14 zu finden, um den Massenschwerpunkt nah an die Welle 1 zu verschieben und so Fliehkräfte zu verringern. Die Kanäle eignen sich besonders gut zur Verwendung als Thermosiphons, um vorzugsweise den Wärmefluss in Richtung der Welle 1 zu begünstigen.

FIG 6 beschreibt einen Ablauf eines Herstellungsverfahrens für einen erfindungsgemäßen Rotor einer elektrischen Maschine. Nach einer bevorzugten Herstellungsart des als Käfigläufer ausgeführten Rotors wird im Verfahrensschritt S1 ein Rotorpaket, das über Nuten verfügt, bereitgestellt. Anschließend werden im Verfahrensschritt S2 bereits vorgefertigte Kupferstäbe in die vorhandenen Nuten eingefügt. Diese erfüllen die Funktion der Käfigstäbe des Käfigläufers. Im Anschluss werden im Verfahrensschritt S3 Kurzschlussringe mittels MPA-verfahren an die axialen Enden der Käfigstäbe angefügt.

## Patentansprüche

1. Verfahren zur Herstellung eines Rotors einer elektrischen Maschine,
- wobei der Rotor einen konzentrisch zur Rotorachse angeordneten Rotorkern (3) aufweist,
- wobei der Rotorkern (3) Nuten (4) aufweist,
- wobei der Rotorkern am jeweiligen axialen Ende der Nuten (4) jeweils eine ringförmige, konzentrisch zur Rotorachse angeordnete Aussparung aufweist, welche die Nuten verbindet,
- wobei die Nuten (4) und die jeweilige ringförmige Aussparung unter Anwendung eines additiven Fertigungsverfahrens mit einem elektrisch leitenden Material gefüllt werden zur Erzeugung eines Kurzschlussrings (2),
- wobei eine Materialmischung aus einem Material einer ersten Festigkeit (8) und wenigstens einem Material mit einer gegenüber der ersten Festigkeit höheren Festigkeit (9) als Material für die additive Fertigung eingesetzt wird,
- wobei ein Materialübergang von einem Material einer ersten Festigkeit (8) zu wenigstens einem Material mit einer gegenüber der ersten Festigkeit höheren Festigkeit (9) in axialer (6) und radialer (7) Richtung des Kurzschlussrings (2) erzeugt wird,
- wobei der Kurzschlussring (2) derart ausgebildet wird, dass die Materialfestigkeit vom Innenradius (14) zum Außenradius (15) des Kurzschlussrings (2) zunimmt,
- wobei der Übergang fließend (11) ist und
- wobei wenigstens eine Haltestruktur oder wenigstens ein Gitter im Kurzschlussring (2) ausgebildet wird.

2. Verfahren nach Anspruch 1, wobei als additives Fertigungsverfahren ein Metall-Pulver- Auftragsverfahren angewendet wird.

3. Verfahren nach einem der Ansprüche 1 oder 2, wobei die Nuten (4) und/oder wenigstens eine ringförmige Aussparung mit Kupfer oder Aluminium oder deren Legierungen gefüllt werden.

4. Verfahren nach einem der Ansprüche 1 bis 3, wobei die Nuten (4) mit vorgefertigtem Material gefüllt werden und die ringförmige Aussparung mittels des Metall-Pulver-Auftragsverfahrens gefüllt wird zur Erzeugung des Kurzschlussrings (2).

5. Verfahren nach einem der Ansprüche 1 bis 4, wobei bei dem durch die Füllung der ringförmigen Aussparung entstehenden Kurzschlussring (2) wenigstens eine Öffnung (5) und/oder wenigstens ein Hohlraum (12) und/oder wenigstens ein Kanal (13) ausgespart werden.

6. Verfahren nach einem der Ansprüche 1 bis 5, wobei die Haltestruktur oder das Gitter aus Titan oder Stahl im Kurzschlussring (2) ausgebildet wird.

7. Verfahren nach einem der Ansprüche 1 bis 6, wobei wenigstens eine Oberflächenstruktur auf dem Kurzschlussring (2), insbesondere in Form eines Flügels und/oder eines Wuchtelements, ausgebildet wird.

8. Verfahren nach einem der Ansprüche 1 bis 7, wobei der Kurzschlussring (2) mit einer anzubindenden Welle (1) stoffschlüssig verbunden wird.

9. Verfahren nach einem der Ansprüche 1 bis 8, wobei das Material einer ersten Festigkeit (8) Kupfer oder Aluminium und das wenigstens eine Material mit einer gegenüber der ersten Festigkeit höheren Festigkeit (9) Stahl oder Titan ist.

10. Rotor einer elektrischen Maschine, der nach einem Verfahren gemäß einem der Ansprüche 1 bis 9 hergestellt wurde, wobei der Kurzschlussring (2) ausgesparte Öffnungen (5), insbesondere Schlitze, aufweist.

11. Rotor einer elektrischen Maschine nach Anspruch 10, wobei der Kurzschlussring (2) Hohlräume (12) und/oder Kanäle (13) aufweist.

12. Rotor einer elektrischen Maschine nach Anspruch 10 oder 11, wobei der Kurzschlussring (2) aus wenigstens einem Material einer ersten Festigkeit (8), insbesondere Kupfer oder Aluminium, und wenigstens einem Material mit einer gegenüber der ersten Festigkeit höheren Festigkeit (9), insbesondere Stahl oder Titan, besteht.

13. Rotor nach einem der Ansprüche 10 bis 12, wobei der Kurzschlussring (2) einen Materialübergang von einem Material einer ersten Festigkeit (8), insbesondere Kupfer oder Aluminium, zu wenigstens einem Material mit einer gegenüber der ersten Festigkeit höheren Festigkeit (9), insbesondere Stahl oder Titan, in axialer (6) und/oder radialer (7) Richtung des Kurzschlussrings aufweist.

14. Rotor nach einem der Ansprüche 10 bis 13, wobei der Kurzschlussring (2) über wenigstens eine Haltestruktur oder wenigstens ein Gitter, insbesondere aus Titan oder Stahl, verfügt.

15. Rotor nach einem der Ansprüche 10 bis 14, wobei der Kurzschlussring (2) über wenigstens eine Oberflächenstruktur, insbesondere in Form eines Flügels und/oder eines Wuchtelements, verfügt.

16. Rotor nach einem der Ansprüche 10 bis 15, wobei der Kurzschlussring (2) mit einer an den Rotor der elektrischen Maschine anzubindenden Welle (1), insbesondere aus Stahl, per Stoffschluss verbunden ist.

17. Elektrische Maschine, die einen Rotor nach einem der Ansprüche 10 bis 16 aufweist.

## Claims

1. Method for producing a rotor of an electric machine,
- wherein the rotor has a rotor core (3) arranged concentrically to the rotor axis,
- wherein the rotor core (3) has grooves (4),
- wherein at each of the respective axial ends of the grooves (4) the rotor core has an annular recess which is arranged concentrically to the rotor axis and connects the grooves,
- wherein the grooves (4) and the respective annular recess are filled with an electrically conducting material using an additive manufacturing method to create a short-circuit ring (2),
- wherein a material mixture consisting of a material with a first strength (8) and at least one material with a higher strength (9) compared to the first strength is used as material for the additive manufacturing,
- wherein a material transition from a material with a first strength (8) to at least one material with a higher strength (9) compared to the first strength is created in the axial (6) and/or radial (7) direction of the short-circuit ring (2),
- wherein the short-circuit ring (2) is embodied such that the material strength increases from the inner radius (14) to the outer radius (15) of the short-circuit ring (2),
- wherein the transition is smooth (11) and
- wherein at least one retaining structure or at least one lattice is embodied in the short-circuit ring (2).

2. Method according to claim 1, wherein a metal powder application method is used as additive manufacturing method.

3. Method according to one of claims 1 or 2, wherein the grooves (4) and/or at least one annular recess are filled with copper or aluminium or alloys thereof.

4. Method according to one of claims 1 to 3, wherein the grooves (4) are filled with premanufactured material and the annular recess is filled by means of the metal powder application method for creating the short-circuit ring (2).

5. Method according to one of claims 1 to 4, wherein at least one opening (5) and/or at least one cavity (12) and/or at least one channel (13) is left in the short-circuit ring (2) resulting due to the filling of the annular recess.

6. Method according to one of claims 1 to 5, wherein the retaining structure or the lattice made of titanium or steel is embodied in the short-circuit ring (2).

7. Method according to one of claims 1 to 6, wherein at least one surface structure is embodied on the short-circuit ring (2), in particular in the form of a blade and/or a balancing element.

8. Method according to one of claims 1 to 7, wherein the short-circuit ring (2) has a material-fit connection to a shaft (1) to be joined.

9. Method according to one of claims 1 to 8, wherein the material with a first strength (8) is copper or aluminium and the at least one material with a higher strength (9) compared to the first strength is steel or titanium.

10. Rotor of an electric machine, which has been produced in accordance with a method according to one of claims 1 to 9, wherein the short-circuit ring (2) has openings (5) left therein, in particular slots.

11. Rotor of an electric machine according to claim 10, wherein the short-circuit ring (2) has cavities (12) and/or channels (13).

12. Rotor of an electric machine according to claim 10 or 11, wherein the short-circuit ring (2) consists of at least one material with a first strength (8), in particular copper or aluminium, and at least one material with a higher strength (9) compared to the first strength, in particular steel or titanium.

13. Rotor according to one of claims 10 to 12, wherein the short-circuit ring (2) has a material transition from a material with a first strength (8), in particular copper or aluminium, to at least one material with a higher strength (9) compared to the first strength, in particular steel or titanium, in the axial (6) and/or radial (7) direction of the short-circuit ring.

14. Rotor according to one of claims 10 to 13, wherein the short-circuit ring (2) possesses at least one retaining structure or at least one lattice, in particular made of titanium or steel.

15. Rotor according to one of claims 10 to 14, wherein the short-circuit ring (2) possesses at least one surface structure, in particular in the form of a blade and/or a balancing element.

16. Rotor according to one of claims 10 to 15, wherein the short-circuit ring (2) is connected to a shaft (1), which is to be joined to the rotor of the electric machine and in particular is made of steel, via a material-fit connection.

17. Electric machine, which has a rotor according to one of claims 10 to 16.

## Revendications

1. Procédé de fabrication d'un rotor d'une machine électrique,
- dans lequel le rotor a un noyau (3) de rotor disposé concentriquement à l'axe du rotor,
- dans lequel le noyau (3) du rotor a des encoches (4),
- dans lequel le noyau du rotor a, à l'extrémité axiale respective des encoches (4), respectivement un évidement annulaire disposé concentriquement à l'axe du rotor et mettant les encoches en communication,
- dans lequel, pour la production d'un anneau (2) de court-circuit, on remplit d'un matériau conducteur de l'électricité, en utilisant un procédé de fabrication additif, les encoches (4) et l'évidement annulaire respectif,
- dans lequel on utilise, comme matériau pour la fabrication additif, un mélange de matériaux composé d'un matériau d'une première résistance (8) et d'au moins un matériau d'une résistance (9) plus grande que la première résistance,
- dans lequel on produit une transition de matériau d'un matériau d'une première résistance (8) à au moins un matériau ayant une résistance (9) plus grande que le premier matériau dans la direction axiale (6) et radiale (7) de l'anneau (2) de court-circuit,
- dans lequel on constitue l'anneau (2) de court-circuit de manière à ce que la résistance du matériau augmente du rayon (14) intérieur au rayon (15) extérieur de l'anneau (2) de court-circuit,
- dans lequel la transition s'effectue en douceur (11) et
- dans lequel on constitue au moins une structure de maintien ou au moins une grille dans l'anneau (2) de court-circuit.

2. Procédé suivant la revendication 1, dans lequel on applique, comme procédé de fabrication additif, un procédé de dépôt de poudre métallique.

3. Procédé suivant l'une des revendications 1 ou 2, dans lequel on remplit les encoches (4) et/ou au moins un évidement annulaire de cuivre ou d'aluminium ou de leurs alliages.

4. Procédé suivant l'une des revendications 1 à 3, dans lequel, pour la production de l'anneau de court-circuit, on remplit les encoches (4) de matériau préfabriqué et on remplit l'évidement annulaire au moyen du procédé de dépôt de poudre métallique.

5. Procédé suivant l'une des revendications 1 à 4, dans lequel on évide au moins une ouverture (5) et/ou au moins une cavité (12) et/ou un canal (13) dans l'anneau (2) de court-circuit créé par le remplissage de l'évidement annulaire.

6. Procédé suivant l'une des revendications 1 à 5, dans lequel on constitue la structure de maintien ou la grille en titane ou en acier dans l'anneau (2) de court-circuit.

7. Procédé suivant l'une des revendications 1 à 6, dans lequel on constitue au moins une structure de surface sur l'anneau (2) de court-circuit, notamment sous la forme d'une aile et/ou d'un élément d'équilibrage.

8. Procédé suivant l'une des revendications 1 à 7, dans lequel on relie l'anneau (2) de court-circuit à coopération de matière à un arbre (1) à rattacher.

9. Procédé suivant l'une des revendications 1 à 8, dans lequel le matériau d'une première résistance (8) est le cuivre ou l'aluminium et le au moins un matériau ayant une résistance (9) plus grande que le premier matériau est l'acier ou le titane.

10. Rotor d'une machine électrique, qui a été fabriqué par un procédé suivant l'une des revendications 1 à 9, l'anneau (2) de court-circuit ayant des ouvertures (5) évidées, en particulier des fentes.

11. Rotor d'une machine électrique suivant la revendication 10, dans lequel l'anneau (2) de court-circuit a des cavités (12) et/ou des canaux (13).

12. Rotor d'une machine électrique suivant la revendication 10 ou 11, dans lequel l'anneau (2) de court-circuit est en au moins un matériau d'une première résistance (8), notamment en cuivre ou en aluminium, et en au moins un matériau ayant une résistance (9) plus grande que la première résistance, notamment en acier ou en titane.

13. Rotor d'une machine électrique suivant l'une des revendications 10 à 12, dans lequel l'anneau (2) de court-circuit a, dans la direction axiale (6) et/ou radiale (7) de l'anneau de court-circuit, une transition de matériau d'un matériau d'une première résistance (8), notamment en cuivre ou en aluminium, en au moins un matériau d'une résistance (9) plus grande que la première résistance, notamment en acier ou en titane.

14. Rotor d'une machine électrique suivant l'une des revendications 10 à 13, dans lequel l'anneau (2) de court-circuit dispose d'au moins une structure de maintien ou d'au moins d'une grille, notamment en titane ou en acier.

15. Rotor d'une machine électrique suivant l'une des revendications 10 à 14, dans lequel l'anneau (2) de court-circuit dispose d'au moins une structure de surface, notamment sous la forme d'une aile et/ou d'un élément d'équilibrage.

16. Rotor d'une machine électrique suivant l'une des revendications 10 à 15, dans lequel l'anneau (2) de court-circuit est relié, par coopération de matière, à un arbre (1), notamment en acier, à rattacher au rotor de la machine électrique.

17. Machine électrique, qui a un rotor suivant l'une des revendications 10 à 16.
